# EUROPEAN PATENT SPECIFICATION

(11) **EP 3 427 175 B1**
(45) Date of publication and mention of the grant of the patent: **09.12.2026**
(21) Application number: 17762634.8
(22) Date of filing: 07.03.2017
(51) Int. Cl.: G06F 21/56, H04W 4/70, G06F 21/50, G06F 21/55, G06F 21/60, H04L 9/40

(54) **SYSTEM AND METHOD FOR PERFORMING IN-CLOUD SECURITY OPERATIONS ON CONNECTED DEVICES**
SYSTEM UND VERFAHREN ZUR DURCHFÜHRUNG VON IN-CLOUD-SICHERHEITSOPERATIONEN AUF VERBUNDENEN VORRICHTUNGEN
SYSTÈME ET PROCÉDÉ PERMETTANT D'EFFECTUER DES OPÉRATIONS DE SÉCURITÉ EN NUAGE SUR DES DISPOSITIFS CONNECTÉS

(30) Priority: 08.03.2016 US 201662304958 P
(43) Date of publication of application: 16.01.2019
(73) Proprietor: B.G. Negev Technologies and Applications Ltd. at Ben-Gurion University, 8410501 Beer Sheva (IL)
(72) Inventor: GURI, Mordechai, 7170656 Modi'in (IL); ELOVICI, Yuval, 7986400 D.N. Lachish (IL)
(74) Representative: Perani & Partners S.p.A.
(86) International application number: PCT/IL2017/050277
(87) International publication number: WO 2017/153983

(56) References cited:
- US-A1- 2006 236 393
- US-A1- 2007 277 241
- US-A1- 2013 019 306
- US-A1- 2013 111 547
- US-A1- 2013 227 636
- US-A1- 2014 047 544
- US-B1- 8 904 525

## Description

### Field of Invention

The field of the invention relates in general to methods and systems for securing computerized environments and devices. More specifically, the invention relates to a method and a system for checking the integrity and authenticity of "Internet of Things" (IoT) type devices, thereby detecting whether they have been infected by malicious code.

### Background of the Invention

The "Internet of Things (IoT)" is the internetworking of physical devices, vehicles (also referred to as "connected devices" and "smart devices"), buildings, and other items embedded with electronics, software, sensors, actuators, and network connectivity that enable these objects to collect and exchange data. The IoT allows objects to be sensed or controlled remotely across existing network infrastructure, creating opportunities for more direct integration of the physical world into computer-based systems, and resulting in improved efficiency, accuracy and economic benefit in addition to reduced human intervention. When IoT is augmented with sensors and actuators, the technology becomes an instance of the more general class of cyber-physical systems, which also encompasses technologies such as smart homes, intelligent transportation and smart cities. Each thing is uniquely identifiable through its embedded computing system and is able to interoperate within the existing Internet infrastructure. According to Wikipedia, Experts estimate that the IoT will consist of almost 50 billion objects ("things") by 2020.

Typically, IoT offers advanced connectivity of devices, systems, and services that goes beyond machine-to-machine (M2M) communications and covers a variety of protocols, domains, and applications. The interconnection of these embedded devices (including smart objects), is expected to be adopted in in nearly all fields of automation.

For example, the range of IoT devices includes heart monitoring implants, biochip transponders on farm animals, electric clams in coastal waters, automobiles with built-in sensors, or field operation devices that assist firefighters in search and rescue operations. These devices use sensors to collect useful data with the help of various existing technologies, and then autonomously flow the data between other devices. Other examples include home automation (smart home devices) such as the control and automation of lighting, heating (like smart thermostat), ventilation, air conditioning (HVAC) systems, and appliances such as washer/dryers, robotic vacuums, air purifiers, ovens or refrigerators/freezers that use Wi-Fi for remote monitoring.

As discussed, the IoT devices that are used in many fields and structures, are manufactured by a huge number of different manufacturers. While the protocol for interconnectivity and communication between various of these device has been defined and standartized, still a vast majority of these devices are characterized by:
a. They apply a great variety of proprietary operating systems (OS), software and hardware;
b. They have a limited, in many cases very limited processing power; and
c. The devices are in many cases very cheap.

Although the IoT devices are typically characterized by said (a) - (c) above, still these devices in many cases are used to control or sense very critical elements. The exploitation of these devices by hostile entities, for example, by injection of malicious code, can cause very significant damages, such as stealing of data, manipulation of the operation of the devices, or using the attacked device as a platform for attacking other device (e.g., bot). Therefore, in contrast to (a) the low cost of each of said devices; (b) the fact that the devices may have a very limited processing power; and (c) the fact that each of the devices may have a different proprietary oprating system that may require a dedicated protection software; there is still a real need to protect the IoT devices from damages resulting from malicious code. This is particularly due to the fact that all these devices are accessible to hackers via the Internet.

The prior art techniques that have been so far adopted for protecting IoT devices from malicious code are typically tradional, for example:
a. Use of a firewall, which substantially isolates the internal network of the IoT devices from the external domain;
b. The use of conventional anti-virus software, whenever possible. This is, however, impractical in IoT devices having proprietary operating systems, in view of the huge variety of the proprietary operating systems involved. Furthermore, this is in many cases impractical in view of the high difference between the value of the IoT device and the cost of developing such software to account for this large variety of proprietary operating systems. Finally, the limited processing power of the IoT devices does not always enable the use of anti-virus software.
c. The use of network based security systems such as firewalls, Intrusion Detection Systems (IDS) and Intrusion Prevention Systems (IPS). These systems are monitoring the network traffic and try to detect attacks or malicious activities. However, this approach is limited only to attacks that can be detect from the network traffic. Moreover, this approach is very limited in detecting attacks that are hiding within encrypted traffic.

More specifically, the prior art has typically applies the classic approach that is typically used for end-points and workstations, which involves running detection programs on the IoT devices to detect, scan and analyze for malicious code within the (1) persistent storage (e.g., disk) and (2) non-persistent storage (e.g., memory). However, this approach is not applicable in many case, in view of the limited computational power of the IoT device.

In another aspect, cloud computing is a type of Internet-based computing that provides shared computer processing resources and data to computers and other devices on demand. It is a model for enabling ubiquitous, on-demand access to a shared pool of configurable computing resources (e.g., computer networks, servers, storage, applications and services) which can be rapidly provisioned and released with minimal management effort. Cloud computing and storage solutions provide users and enterprises with various capabilities to store and process their data in either privately owned, or third-party data centers that may be located far from the user-ranging in distance from across a city to across the world. Cloud computing relies on sharing of resources to achieve coherence and economy of scale, similar to a utility (like the electricity grid) over an electricity network.

It is therefore an object of the present invention to provide a method and system for protecting IoT devices from malicious code.

It is another object of the present invention to provide a method and system that can protect IoT devices, that wereotherwise remained unprotected.

It is still another object of the present invention to provide such a system that can detect malicious code in IoT devices, provide an alert, and remove the malicious code.

It is still another object of the present invention to provide upgrades and updates to the operating systems of the IoT devices, whether these operating systems are standard, or proprietary.

Other objects and advantages of the invention will become apparent as the description proceeds. Patent document US2013019306 discloses relevant prior art.

### Summary of the Invention

The invention relates to a system for protecting IoT devices from malicaious code, which comprises: (a) a memory extracting module at each of said IoT devices, for extracting a copy of at least a portion of the memory content from the IoT device, and sending the same to an in-cloud server; and (b) an in-cloude server for receiving said memory content, and performing an integrity check for a possible existance of malicious code within said memory content.

In an embodiment of the invention, said in-cloud server performs one or more of the following: (a) analysis of the memory to find malware using static analysis methods; analysis of the memory to find malicious behavior using behavioral and heuristics methods; (b) reconstruction of the state of an OS of the IoT to determine and report important structural elements; (c) check of the integrity of the OS and its memory to possibly find fault in the integrity or hidden processes; (d) a cross-view check on resources to find rootkits and hidden operations; and (e) a cross-view check and validation of memory contents of plurality of IoT devices.

In an embodiment of the invention, and following said integrity check, said in-cloud server performs one or more of the following:
(1) logging of the results;
(2) reporting the results, raising a warning or an alert in a case of detection of an unexpected code or behaveior; or
(3) communicating and responding to an IoT request.

In an embodiment of the invention, the memory, a copy of which is sent to the in-cloud server, is either a persistent memory or a non-persistent memory.

In an embodiment of the invention, said memory extraction module is embedded within a kernel of a respective operating system of the IoT device.

In an embodiment of the invention, said memory extraction module is positioned within a trusted layer at the IoT device.

In an embodiment of the invention, said memory extraction module is positioned within a Trusted Execution Environment at the processor of the IoT device.

### Brief description of the Drawings

In the drawings:

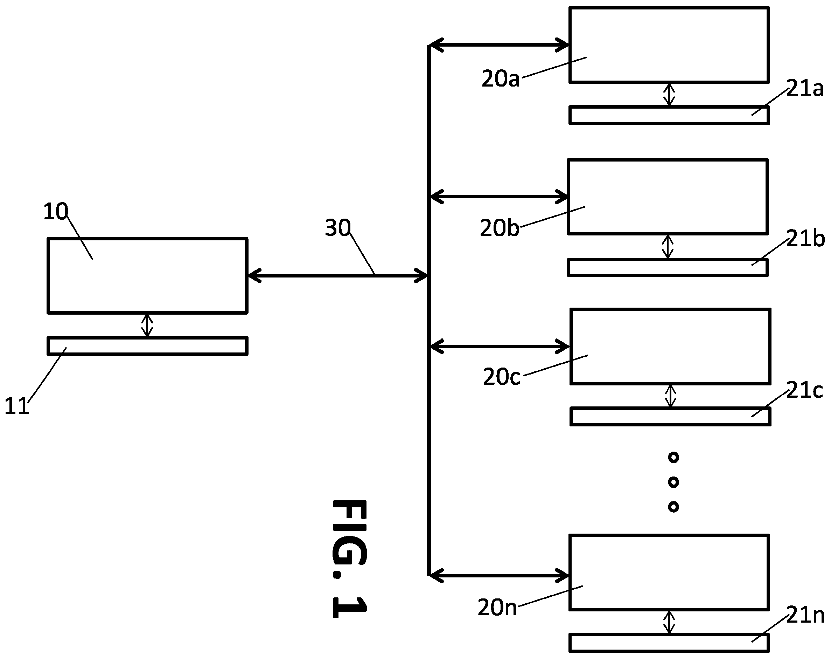

- Fig. 1 illustrates the general structure of the system of the present invention.

### Detailed Description of Preferred Embodiments of the Invention

As noted, there are many cases in which the classical techniques are not applicable for protecting IoT devices from damages of malicious codes. The present invention provides alternative system and method for protecting IoT devices.

Fig. 1 shows a general structure of the system of the present invention. The system comprises in general an in-cloud protection server 10, which is used to protect a plurality of remote IoT devices 20a - 20n from malicious code. Several of the devices 20a- 20n may be stand-alone devices, others may be a part of IoT networks. In general, the in-cloud server 10 may serve a very large number of IoT devices. For example, a single in-cloud server may serve hundreds of thouthands, even millions of IoT devices 20, that are spread along the globe.

Each of the devices 20a-20n comprises a memory extraction modul 21a-21n, respectively. In one embodiment, the memory extraction module 21 is embedded within the kernel of the respective operating system of device 20. In another embodiment, the memory extraction module 21 is positioned within a trusted layer, such as hypervisor, at device 20. In still another embodiment, the memory extraction module may be positioned within a Trusted Execution Environment (TEE) at the processor of the IoT device.

The memory extraction modules 21 at each of the devices 20 extracts, either upon demand from server 10, or independently the memory content (persistent and/or non persistent), and transmits the same to the in-cloud server 10 for inspection and verification.

Upon receipt of the memory content (or a portion thereof) of a device 20 from a respective memory extraction module 21, the in-cloud server 10 performs one or more of the following operations:
(1) Analysis of the memory to find malware using static analysis methods;
(2) Analysis of the memory to find malicious behavior using behavioral and heuristics methods;
(3) Reconstruction of the state of the OS to determine and report important structural elements, such as:
   a. Process/thread list
   b. Communication ports
   c. Kernel modules
   d. Objects in memory
   e. Object in cache
   f. Open/close files
   g. System status
   h. Bootstrap information
   i. Memory corruptions
(4) Check of the integrity of the OS and its memory to find fault in the integrity or hidden processes;
(5) A cross-view check on resources to find rootkits and hidden operations. The cross-view collaborates with components as reported from within the OS; and.
(6) A cross-view check and validation of memory contents of plurality of IoT devices.

Following the above perations, the in-cloud server may perform one ore more of the following operations:
(1) Logging of the results;
(2) Reporting the results, raising a warning or an alert in a case of detection of an unexpected code or behaveior; or
(3) Communicating and responding to an IoT request.

For its proper operation, server 10 has a database 11 that contains authentic and reliable data for comparison and verification with the memory content which is received from the IoT devices. For example, the database 11 may contain a copy of the authentic OS which is used in each IoT device 20 and its version number. The database content, whether relating to standard data or proprietary data, is accumulated by the operator of server 10, for example, by contacting the manufacturers of devices 20. The fact that a single server 10 can serve a huge number of devices 20 significantly reduces the costs of obtaining such data. Moreover, the communication between server 10 and devices 20 is typically performed over a secured channel 30. The system of the present invention also overcomes the problem which is associated with the typical IoT devices, namely the lack of sufficient processing power to perform the integrity check in the classical approach.

Server 10 may also perform an update of the OS of each of the IoT devices, when it becomes necessary. The integrity check and/or update may be performed from time to time, or periodically.

As shown, the in-cloud system of the present invention provides protection to IoT devices from damages resulting from malicious code. The system of the present invention provides such a protection in cases where the classical approach is either inapplicable (for example due to lack of sufficient processing power), or impractical (for example, due to the relatively high costs involved in providing of such protection).

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the scope of the claims.

## Claims

1. A system for protecting interoperating and uniquely identifiable Internet of Things (IoT) devices, each of which having limited processing power and a proprietary operating system (OS), from malicious code, said system comprising:
a. a memory extraction module at each of a plurality of devices, for extracting a copy of at least a portion of memory content from one of the devices, and sending the same to an in-cloud server; and
b. said in-cloud server, for receiving and inspecting said extracted memory content,
wherein:
- said memory extraction module is operable to extract, both upon demand from said server, and independently at a kernel of the proprietary OS of the IoT device, a copy of at least a portion of the memory content from one of the IoT devices, and to transmit said extracted memory content to said server for inspection and verification,
- said server has a database that contains authentic and reliable data for comparison and verification with said extracted memory content which is received from the IoT devices,
- said server is operable to perform an integrity check of the proprietary OS and of said extracted memory content received from the IoT devices, to possibly find a fault in the integrity of the proprietary OS or in hidden processes and to perform reconstructing a state of the proprietary OS including at least a process/thread list and kernel modules,
- said server is further configured to perform a cross-view check and validation of memory contents received from a plurality of identical IoT devices to identify anomalies.

2. A system according to claim 1, wherein said in-cloud server is operable to perform one or more of the following additional operations:
a. analysis of the extracted memory content to find malware using static analysis methods;
b. analysis of the extracted memory content to find malicious behavior using behavioral and heuristics methods;
c. reconstruction of a state of an OS of the IoT device to determine and report one or more structural elements of the OS; and
d. a cross-view check on resources to find rootkits and hidden operations.

3. A system according to claim 2, wherein following said integrity check, said in-cloud server performs one or more of the following:
(1) logging of the results;
(2) reporting the results, raising a warning or an alert in a case of detection of an unexpected code or behaveior; or
(3) communicating and responding to an IoT request.

4. A system according to claim 1, wherein the extracted memory content is either persistent memory content or non-persistent memory content.

5. A system according to claim 1, wherein said memory extraction module is embedded within a kernel of a respective operating system of the IoT device.

6. A system according to claim 1, wherein said memory extraction module is positioned within a trusted layer at the IoT device.

7. A system according to claim 1, wherein said memory extraction module is positioned within a Trusted Execution Environment at the processor of the IoT device.

8. A system according to claim 2, wherein the one or more structural elements are selected from the group consisting of:
i. Process/thread list;
ii. Communication ports;
iii. Kernel modules;
iv. Objects in memory;
v. Object in cache;
vi. Open/close files;
vii. System status;
viii. Bootstrap information; and
ix. Memory corruptions.

9. A system according to claim 1, wherein the extracted memory content includes persistent and non-persistent memory content.

10. A system according to claim 1, further comprising means for removing detected malicious code.

11. A system according to claim 1, wherein the fault is malicious code.

12. A system according to claim 1, wherein communication between the server and each of the IoT devices is performable over a secured channel.

13. A system according to claim 1, wherein the database of the server includes a copy of the proprietary OS used in each of the IoT devices and a version number of the proprietary OS.

## Patentansprüche

1. System zum Schützen von interoperierenden und eindeutig identifizierbaren Internet-der-Dinge- (IoT-) Vorrichtungen, von denen jede eine begrenzte Verarbeitungsleistung und ein proprietäres Betriebssystem (OS) aufweist, vor bösartigem Code, wobei das System umfasst:
a. ein Speicher-Extraktionsmodul an jeder einer Vielzahl von Vorrichtungen zum Extrahieren einer Kopie von zumindest einem Teil eines Speicherinhalts von einer der Vorrichtungen und Senden desselben an einen In-Cloud-Server; und
b. den In-Cloud-Server zum Empfangen und Prüfen des extrahierten Speicherinhalts,
wobei:
- das Speicher-Extraktionsmodul betreibbar ist, um sowohl auf Anforderung von dem Server als auch unabhängig an einem Kernel des proprietären OS der IoT-Vorrichtung eine Kopie von zumindest einem Teil des Speicherinhalts von einer der IoT-Vorrichtungen zu extrahieren und den extrahierten Speicherinhalt zur Prüfung und Verifikation an den Server zu übertragen,
- der Server eine Datenbank aufweist, die authentische und zuverlässige Daten zum Vergleich und zur Verifikation mit dem extrahierten Speicherinhalt enthält, der von den IoT-Vorrichtungen empfangen wird,
- der Server betreibbar ist, um eine Integritätsprüfung des proprietären OS und des von den IoT-Vorrichtungen empfangenen extrahierten Speicherinhalts durchzuführen, um möglicherweise einen Fehler in der Integrität des proprietären OS oder in verborgenen Prozessen zu finden, und um eine Rekonstruktion eines Zustands des proprietären OS durchzuführen, der mindestens eine Prozess-/Thread-Liste und Kernel-Module umfasst,
- der Server ferner konfiguriert ist, um eine Cross-View-Prüfung und Validierung von Speicherinhalten durchzuführen, die von einer Vielzahl von identischen IoT-Vorrichtungen empfangen werden, um Anomalien zu identifizieren.

2. System nach Anspruch 1, wobei der In-Cloud-Server betreibbar ist, um eine oder mehrere der folgenden zusätzlichen Operationen durchzuführen:
a. Analyse des extrahierten Speicherinhalts zum Finden von Malware unter Verwendung von statischen Analysemethoden;
b. Analyse des extrahierten Speicherinhalts zum Finden von bösartigem Verhalten unter Verwendung von verhaltensbasierten und heuristischen Methoden;
c. Rekonstruktion eines Zustands eines OS der IoT-Vorrichtung, um ein oder mehrere strukturelle Elemente des OS zu bestimmen und zu melden; und
d. eine Cross-View-Prüfung von Ressourcen zum Finden von Rootkits und verborgenen Operationen.

3. System nach Anspruch 2, wobei der In-Cloud-Server nach der Integritätsprüfung eines oder mehreres von Folgendem durchführt:
(1) Protokollieren der Ergebnisse;
(2) Melden der Ergebnisse, Ausgeben einer Warnung oder eines Alarms im Fall der Erkennung eines unerwarteten Codes oder Verhaltens; oder
(3) Kommunizieren und Antworten auf eine IoT-Anforderung.

4. System nach Anspruch 1, wobei der extrahierte Speicherinhalt entweder persistenter Speicherinhalt oder nicht-persistenter Speicherinhalt ist.

5. System nach Anspruch 1, wobei das Speicher-Extraktionsmodul innerhalb eines Kernels eines jeweiligen Betriebssystems der IoT-Vorrichtung eingebettet ist.

6. System nach Anspruch 1, wobei das Speicher-Extraktionsmodul innerhalb einer vertrauenswürdigen Schicht (*trusted layer*) an der IoT-Vorrichtung positioniert ist.

7. System nach Anspruch 1, wobei das Speicher-Extraktionsmodul innerhalb einer vertrauenswürdigen Ausführungsumgebung Trusted Execution Environment am Prozessor der IoT-Vorrichtung positioniert ist.

8. System nach Anspruch 2, wobei das eine oder die mehreren strukturellen Elemente ausgewählt sind aus der Gruppe bestehend aus:
i. Prozess-/Thread-Liste;
ii. Kommunikationsports;
iii. Kernel-Module;
iv. Objekte im Speicher;
v. Objekt im Cache;
vi. offene/geschlossene Dateien;
vii. Systemstatus;
viii. Bootstrap-Informationen; und
ix. Speicherbeschädigungen (*memory corruptions*).

9. System nach Anspruch 1, wobei der extrahierte Speicherinhalt persistenten und nicht-persistenten Speicherinhalt umfasst.

10. System nach Anspruch 1, ferner umfassend Mittel zum Entfernen von erkanntem bösartigem Code.

11. System nach Anspruch 1, wobei der Fehler bösartiger Code ist.

12. System nach Anspruch 1, wobei eine Kommunikation zwischen dem Server und jeder der IoT-Vorrichtungen über einen gesicherten Kanal durchführbar ist.

13. System nach Anspruch 1, wobei die Datenbank des Servers eine Kopie des proprietären OS, das in jeder der IoT-Vorrichtungen verwendet wird, und eine Versionsnummer des proprietären OS umfasst.

## Revendications

1. Système de protection de dispositifs de l'Internet des objets (IoT) interopérables et identifiables de manière unique, chacun d'eux ayant une puissance de traitement limitée et un système d'exploitation (OS) propriétaire, contre un code malveillant, ledit système comprenant :
a. un module d'extraction de mémoire au niveau de chacun d'une pluralité de dispositifs, pour extraire une copie d'au moins une partie d'un contenu de mémoire depuis l'un des dispositifs, et envoyer celle-ci à un serveur dans le nuage ; et
b. ledit serveur dans le nuage, pour recevoir et inspecter ledit contenu de mémoire extrait,
dans lequel :
- ledit module d'extraction de mémoire est fonctionnel pour extraire, à la fois sur demande dudit serveur et de manière indépendante au niveau d'un noyau de l'OS propriétaire du dispositif IoT, une copie d'au moins une partie du contenu de mémoire depuis l'un des dispositifs IoT, et pour transmettre ledit contenu de mémoire extrait audit serveur pour inspection et vérification,
- ledit serveur comporte une base de données qui contient des données authentiques et fiables pour comparaison et vérification avec ledit contenu de mémoire extrait qui est reçu des dispositifs IoT,
- ledit serveur est fonctionnel pour exécuter un contrôle d'intégrité de l'OS propriétaire et dudit contenu de mémoire extrait reçu des dispositifs IoT, pour trouver éventuellement un défaut dans l'intégrité de l'OS propriétaire ou dans des processus cachés et pour exécuter une reconstruction d'un état de l'OS propriétaire incluant au moins une liste de processus/threads et des modules de noyau,
- ledit serveur est en outre configuré pour exécuter un contrôle croisé et une validation de contenus de mémoire reçus d'une pluralité de dispositifs IoT identiques afin d'identifier des anomalies.

2. Système selon la revendication 1, dans lequel ledit serveur dans le nuage est fonctionnel pour exécuter une ou plusieurs des opérations supplémentaires suivantes:
a. une analyse du contenu de mémoire extrait pour trouver un logiciel malveillant à l'aide de méthodes d'analyse statique ;
b. une analyse du contenu de mémoire extrait pour trouver un comportement malveillant à l'aide de méthodes comportementales et heuristiques ;
c. une reconstruction d'un état d'un OS du dispositif IoT pour déterminer et signaler un ou plusieurs éléments structurels de l'OS ; et
d. un contrôle croisé sur des ressources pour trouver des rootkits et des opérations cachées.

3. Système selon la revendication 2, dans lequel, après ledit contrôle d'intégrité, ledit serveur dans le nuage exécute une ou plusieurs des opérations suivantes :
(1) la journalisation des résultats ;
(2) la notification des résultats, l'émission d'un avertissement ou d'une alerte en cas de détection d'un code ou d'un comportement inattendu ; ou
(3) la communication et la réponse à une requête IoT.

4. Système selon la revendication 1, dans lequel le contenu de mémoire extrait est soit un contenu de mémoire persistante, soit un contenu de mémoire non persistante.

5. Système selon la revendication 1, dans lequel ledit module d'extraction de mémoire est intégré au sein d'un noyau d'un système d'exploitation respectif du dispositif IoT.

6. Système selon la revendication 1, dans lequel ledit module d'extraction de mémoire est positionné au sein d'une couche de confiance au niveau du dispositif IoT.

7. Système selon la revendication 1, dans lequel ledit module d'extraction de mémoire est positionné au sein d'un environnement d'exécution de confiance Trusted Execution Environment au niveau du processeur du dispositif IoT.

8. Système selon la revendication 2, dans lequel le ou les éléments structurels sont choisis dans le groupe constitué par:
i. une liste de processus/threads ;
ii. des ports de communication ;
iii. des modules de noyau ;
iv. des objets en mémoire ; v. un objet en mémoire cache ;
vi. des fichiers ouverts/fermés ;
vii. un état du système ;
viii. des informations d'amorçage ; et
ix. des corruptions de mémoire.

9. Système selon la revendication 1, dans lequel le contenu de mémoire extrait inclut un contenu de mémoire persistante et de mémoire non persistante.

10. Système selon la revendication 1, comprenant en outre des moyens pour supprimer le code malveillant détecté.

11. Système selon la revendication 1, dans lequel le défaut est un code malveillant.

12. Système selon la revendication 1, dans lequel une communication entre le serveur et chacun des dispositifs IoT peut être effectuée sur un canal sécurisé.

13. Système selon la revendication 1, dans lequel la base de données du serveur inclut une copie de l'OS propriétaire utilisé dans chacun des dispositifs IoT et un numéro de version de l'OS propriétaire.
